# FASCICULE DE BREVET EUROPEEN

(11) **EP 1 774 505 B1**
(45) Date de publication et mention de la délivrance du brevet: **03.10.2007**
(21) Numéro de dépôt: 05766816.2
(22) Date de dépôt: 12.07.2005
(51) Int. Cl.: G09G 3/36

(54) **AFFICHEUR MATRICIEL A CRISTAUX LIQUIDES**
FLÜSSIGKRISTALL-MATRIXANZEIGE
LIQUID-CRYSTAL MATRIX DISPLAY

(30) Priorité: 13.07.2004 FR 0407813
(43) Date de publication de la demande: 18.04.2007
(73) Titulaire: THALES, 92200 Neuilly sur Seine (FR)
(72) Inventeur: LEBRUN, Hugues Thales Intellectual Property, 94117 Arcueil Cedex (FR)
(74) Mandataire: Esselin, Sophie
(86) Numéro de dépôt international: PCT/EP2005/053320
(87) Numéro de publication internationale: WO 2006/005749

(56) Documents cités:
- EP-A- 0 509 727
- EP-A- 1 026 658
- EP-A- 1 298 636
- WO-A-20/04001715
- US-B1- 6 175 351
- US-B1- 6 181 311
- PATENT ABSTRACTS OF JAPAN vol. 015, no. 224 (P-1212), 7 juin 1991 (1991-06-07) & JP 03 064791 A (CASIO COMPUT CO LTD), 20 mars 1991 (1991-03-20) & JP 03 064791 A (CASIO COMPUT CO LTD) 20 mars 1991 (1991-03-20)

## Description

La présente invention concerne un afficheur matriciel comprenant un dispositif d'écriture qui permette un mode d'adressage séquentiel couleur de la matrice. Dans un tel mode, on fait afficher successivement par la matrice les données d'une trame de rouge, puis d'une trame de vert, puis d'une trame de bleu, de façon à obtenir une image couleur. Chaque trame d'affichage vidéo comprend ainsi trois trames couleurs.

Un tel système d'affichage est notamment utilisé pour réduire le coût des systèmes de projection d'images vidéo couleur, en limitant le nombre d'afficheurs et en limitant le matériel optique à celui nécessité par le seul afficheur utilisé. On forme l'image couleur sur l'écran matriciel LCD éclairé successivement sous trois couleurs différentes, rouge, vert, bleu par exemple au moyen d'un disque dont la surface est séparée en segments de couleurs différentes dans le faisceau lumineux.

D'autres applications sont visées, telles que par exemple les applications utilisant des systèmes de réalité virtuelle (Systèmes de projection LCD pour des systèmes compacts du type *"near to eye*")*.* Dans ce domaine, un problème majeur est l'encombrement. L'utilisation d'un seul afficheur pour visualiser des images virtuelles fournie une réponse adaptée.

Si on considère un afficheur matriciel classique, utilisé de manière habituelle pour afficher une image monochrome, l'écriture de l'information dans les éléments pixels nécessite un seul dispositif d'écriture par élément pixel. Chaque élément pixel est rattaché à une ligne de sélection correspondant à une ligne de la matrice et à une ligne de donnée correspondant à une colonne de la matrice. Ce dispositif d'écriture est typiquement un échantillonneur-bloqueur, dont la commande de mémorisation d'une donnée présentée en entrée sur la colonne est réalisée par l'activation de l'échantillonneur par la ligne de sélection. L'image est ainsi rafraîchie séquentiellement par activation successive des lignes de sélection.

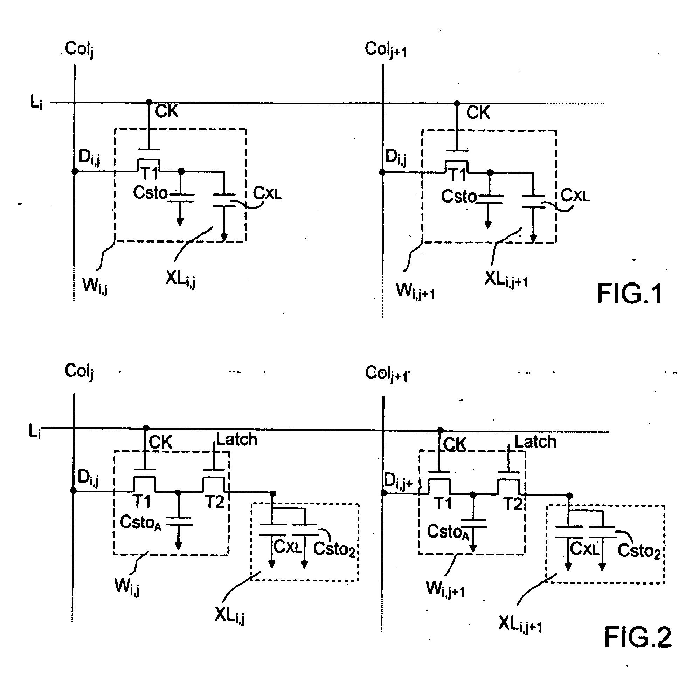

Un exemple d'un tel dispositif d'écriture est représenté sur la figure 1.

Sur cette figure, on a représenté deux éléments pixels XL_{i,j} et XL_{i,j+1}, d'une même ligne i de la matrice. Ces éléments pixels sont rattachés à la ligne de sélection Lᵢ, et à une ligne de donnée respective, Colⱼ pour l'élément pixel XLᵢⱼ, et Colⱼ₊₁ pour l'élément pixel XL_{i,j+1}, par un dispositif d'écriture respectif, W_{i,j} pour l'élément pixel XLᵢⱼ, et W_{i,j+1} pour l'élément pixel XL_{i,j+1.}

Chaque élément pixel est représenté par sa capacité équivalente, notée CXL, en parallèle sur la capacité de stockage supplémentaire Csto qui est généralement prévue, la valeur de CXL étant généralement trop faible pour permettre le maintien de l'information tout le temps de la trame. Dans un exemple, la capacité CXL est de l'ordre de 1,5 femtofarads, et la capacité

Csto est de l'ordre de 50 femtofarads, permettant de compenser les différentes pertes de la structure.

Chaque dispositif d'écriture, par exemple W_{i,j}, est un circuit échantillonneur-bloqueur. Dans l'exemple ce circuit comprend un transistor de commutation T1 connecté entre la ligne de donnée Colⱼ et l'élément pixel XL_{i,j}. Le transistor T1 a sa grille qui est connectée à la ligne de sélection de ligne Lᵢ, et une électrode (source ou drain) qui est connectée à la ligne de donnée Colⱼ. La capacité de stockage Csto est connectée entre l'autre électrode du transistor T1 et une référence de tension, typiquement la masse. Lorsque la ligne de sélection L₁ est activée, le transistor devient semblable à un court-circuit, permettant la charge de la capacité de stockage Csto, jusqu'au niveau de tension V_{D} appliqué sur la colonne et représentant la donnée D à afficher. Puis la ligne de sélection est désactivée et le transistor retourne à l'état non passant. La donnée D est mémorisée dans le condensateur Csto.

Lorsque toutes les lignes de sélection de la matrice ont été successivement activées, toutes les données de la trame sont mémorisées dans les dispositifs d'écriture de la matrice. On retrouve un niveau de tension sur chaque élément pixel, correspondant à la donnée à afficher sur cet élément. Un tel système ne fonctionne pas en mode séquentiel couleur. En effet, pour chaque trame correspondant à une image, il faut échantillonner les données relatives à la couleur rouge, puis les transférer sur les éléments pixels, faire de même avec la couleur verte, puis la couleur bleue. La méthode d'adressage classique en séquentiel couleur provoquerait, par exemple, un effacement des données de la couleur rouge au profit des données de la couleur verte pendant le temps d'éclairement en vert. Le résultat serait une perte inacceptable de l'information colorimétrique.

Il est donc indispensable d'avoir au niveau de chaque pixel au moins deux échantillonneurs-bloqueurs en série comme illustré sur la figure 2. Le premier échantillonneur-bloqueur (transistor T1) est utilisé suivant le mode décrit précédemment pour échantillonner l'information sur une capacité de stockage intermédiaire Csto_{A} (capacité d'échantillonnage). Le deuxième échantillonneur-bloqueur (transistor T2) est activé pour tous les pixels à la fin de chaque trame couleur pour transférer l'information entre la capacité d'échantillonnage Csto_{A} et une capacité de stockage Csto_{B} où elle restera valide pendant toute la trame couleur.

Un affichage similaire est connu de US-B-6 181 311.

Le modèle de pixel de la figure 2 a un défaut majeur qui le rend difficile à utiliser. La tension échantillonnée est diluée sur les deux capacités Csto_{A} et Csto_{B} lors du transfert en fin de trame couleur. Cette dilution de tension n'est pas acceptable pour un écran LCD avec une matrice active sur silicium, car elle impose l'utilisation de tensions d'adressage incompatibles avec les possibilités des transistors.

Des nouveaux dispositifs d'écriture ont ainsi été développés avec des dispositifs de commande associés pour améliorer les performances en écriture de l'afficheur. Dans ces dispositifs, on a doublé les deux échantillonneurs T1, T2 sur chacun des pixels, de façon à ce que la capacité d'échantillonnage serve également de capacité de stockage une trame sur deux. Cela permet de n'avoir quasiment pas de dilution de tension au cours du transfert.

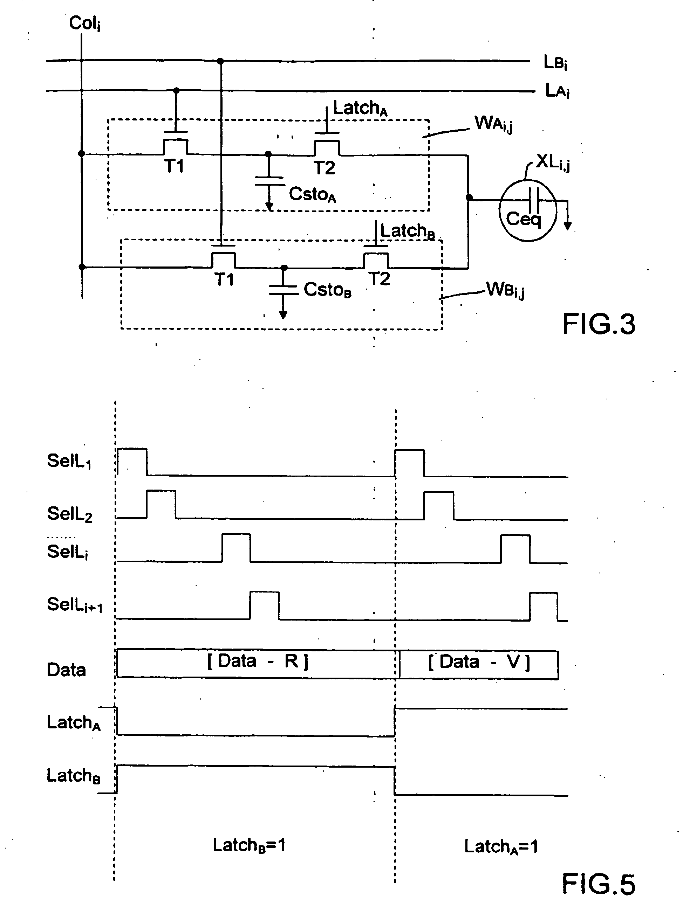

Pour commander de façon différenciée chacun des échantillonneurs, on a prévu dans la structure de la matrice de dédoubler la ligne de sélection. Ainsi, comme représenté sur la figure 3, on a deux lignes de sélection L_{Aᵢ} et L_{Bᵢ} pour chaque ligne i de la matrice. Les lignes L_{Aᵢ} forment un premier groupe A de lignes de sélection de la matrice. Les lignes L_{Bᵢ} forment un deuxième groupe B de lignes de sélection de la matrice.

Le dispositif d'écriture est dédoublé de la même manière, l'un W_{A_{i,j}} pour être commandé par la ligne de sélection L_{Aᵢ}, l'autre W_{B_{i,j}} pour être commandé par la ligne de sélection L_{Bᵢ}.

Un affichage similaire est connu de WO-A-2004/001715.

Le dispositif de commande d'adressage doit commander deux fois plus de lignes, avec alternance des commandes en fonction de la trame.

Par exemple, sur une trame, si le signal de trame Latch_{A} est à 1 et le signal de trame latch_{B} est à 0, il active tour à tour les lignes L_{B₁} du groupe B, pour échantillonner les données d'une nouvelle trame, tandis que le contact est établi entre l'information mémorisée pendant la trame précédente dans les dispositifs d'écriture W_{A_{i,j}} du groupe A et les éléments pixels. Quand le signal de trame Latch_{A} passe à 0 et le signal de trame Latch_{B} passe à 1, il active tour à tour les lignes L_{A₁} du groupe A pour échantillonner les données d'une nouvelle trame, tandis que le contact est établi entre l'information mémorisée pendant la trame précédente sur les dispositifs d'écriture W_{B_{i,j}} du groupe B et les éléments pixels. En résumé, les signaux Latch_{A} et Latch_{B} sont des signaux indicateur de trame. Selon les signaux, le dispositif de commande applique ces signaux d'activation, généralement fournis par un registre à décalage, vers le groupe A ou le groupe B des lignes de sélection. Cette solution s'avère cependant très encombrante, puisqu'elle multiplie le nombre de lignes de la matrice par deux, avec tous les problèmes d'implantation, de croisements avec d'autres signaux et d'encombrement que cela implique. Elle multiplie également le nombre de circuits de commande des lignes par deux.

Un autre affichage similaire est connu de US-B-6 175 351.

Un objet de l'invention, est un afficheur matriciel dont l'encombrement est réduit.

Un objet de l'invention est un afficheur matriciel adapté à un mode d'affichage en séquentiel couleur qui n'implique pas le doublement des lignes ou des colonnes de la matrice.

L'idée à la base de l'invention est d'utiliser deux dispositifs d'écriture à commandes croisées.

Une autre idée à la base de l'invention est d'utiliser pour les pixels d'une ligne, la ligne de sélection associée à cette ligne et une autre ligne de sélection de la matrice, pour commander les deux dispositifs d'écriture à commande croisée de chaque élément pixel. Avantageusement, cette autre ligne de sélection est la ligne suivante. Pour la dernière ligne de la matrice, ce sera une ligne supplémentaire. De cette façon le nombre de lignes de connexion supplémentaires est singulièrement réduit. En outre, peu d'éléments de commutation supplémentaires sont nécessaires pour réaliser la commande croisée. On obtient un système d'affichage performant et de faible encombrement.

Ainsi, telle que caractérisée l'invention concerne un afficheur matriciel à cristaux liquides, comprenant une matrice d'éléments pixels, chaque élément pixel étant associé à une ligne de sélection et une ligne de donnée de la matrice. Selon l'invention, l'afficheur matriciel comprend :
- un dispositif de commande de la matrice délivrant au moins un premier signal de sélection de trame et un deuxième signal de sélection de trame ;
- un premier dispositif d'écriture et un deuxième dispositif d'écriture associé à chaque élément pixel de la matrice, lesdits dispositifs d'écriture étant à commandes de transfert et d'échantillonnage croisées, le premier signal de sélection de trame entraînant l'échantillonnage dans le premier dispositif d'écriture, et la mise en contact d'une information déjà échantillonnée dans le deuxième dispositif d'écriture et de l'élément pixel, le deuxième signal de sélection de trame entraînant l'échantillonnage dans le deuxième dispositif d'écriture, et la mise en contact d'une information déjà échantillonnée dans le premier dispositif d'écriture et de l'élément.pixel,

un dispositif d'écriture étant connecté à la ligne de sélection associée de l'élément pixel, et l'autre dispositif d'écriture étant connecté à une autre ligne de sélection de la matrice.

Le premier signal de sélection de trame et le deuxième signal de trame sont des signaux binaires inverses l'un de l'autre.

Selon un mode de fonctionnement adapté pour être utilisé dans un système de modification de tous les points d'une image simultanément sur un afficheur matriciel, le dispositif de commande inverse les niveaux desdits premier signal de sélection de trame et deuxième signal de sélection de trame à chaque nouvelle trame.

Selon un autre mode de fonctionnement adapté pour être utilisé dans un système de projection comprenant un afficheur matriciel adapté à une utilisation en mode séquentiel couleur, le dispositif de commande inverse les niveaux desdits premier signal de sélection de trame et deuxième signal de sélection de trame à chaque nouvelle trame couleur.

D'autres caractéristiques et avantages de l'invention sont présentés dans la description suivante, faite à titre indicatif et non limitatif de l'invention et en référence aux dessins annexés, dans lesquels :
- la figure 1 déjà décrite représente un dispositif d'écriture d'un afficheur matriciel classique;
- la figure 2 déjà décrite présente un simple échantillonneur-bloqueur par pixel;
- la figure 3 déjà décrite représente un dispositif d'écriture selon l'état de la technique permettant une commande d'affichage en séquentiel couleur;
- la figure 4 représente un dispositif d'écriture selon l'invention permettant une commande d'affichage en séquentiel couleur;
- la figure 5 est un diagramme des temps des signaux de commande d'un afficheur selon l'invention;
- la figure 6 est un tableau récapitulatif d'une séquence de commande correspondante; et
- la figure 7 est une représentation schématique d'un système de projection utilisant un afficheur matriciel selon l'invention.

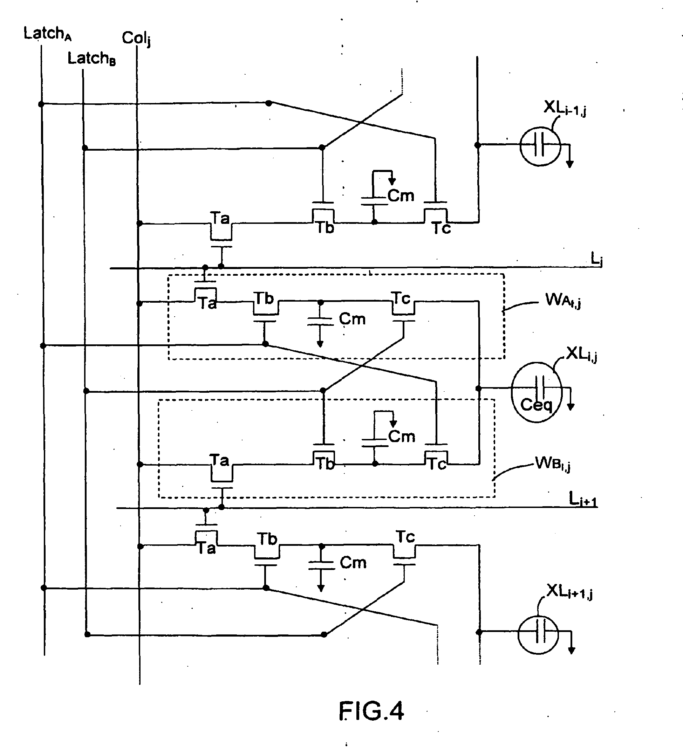

Sur la figure 4; on a représenté des éléments pixels XL_{i-1,j}, XL_{i,j}, XL_{i+1,j}, d'un afficheur matriciel, et leurs dispositifs d'écriture associés.

A chaque élément pixel est associé un premier dispositif d'écriture et un deuxième dispositif d'écriture à commandes d'échantillonnage et de transfert croisées, commandées par des signaux de sélection de trame Latch_{A} et

Latch_{B}, l'un des dispositifs étant associé à la ligne de sélection de l'élément pixel considéré, l'autre dispositif étant associé à une autre ligne de sélection de la matrice.

Plus précisément, si on considère l'élément pixel XLᵢⱼ représenté sur la figure 4, un premier dispositif d'écriture W_{A_{i,j}} est prévu, connecté entre la ligne de donnée Colⱼ et l'élément pixel. Ce dispositif est sélectionné par l'activation de la ligne de sélection Lᵢ de l'élément pixel. Il est activé pour l'échantillonnage de la donnée présentée sur la ligne de donnée Colⱼ, par le premier signal de sélection de trame Latch_{A}, et il est commandé en transfert de donnée par le deuxième signal de sélection de trame Latch_{B}.

Un deuxième dispositif d'écriture W_{B_{i,j}} est prévu, connecté entre la ligne de donnée Colⱼ et l'élément pixel. Ce dispositif est sélectionné par l'activation de la ligne de sélection suivante, Lᵢ₊₁. Il est activé en échantillonnage de la donnée présentée sur la ligne de donnée Colⱼ, par le deuxième signal de sélection de trame Latch_{B}, et il est commandé en transfert de donnée par le premier signal de sélection de trame Latch_{A}.

Dans chaque dispositif, la commande en échantillonnage et la commande de transfert sont exclusives l'une de l'autre. Quand un dispositif est commandé en échantillonnage, l'autre dispositif est commandé en transfert et vice-versa. Plus particulièrement, dans un exemple de réalisation et comme illustré sur la figure 4, chaque dispositif d'écriture comporte un premier transistor de commutation Ta, dont la grille est connectée à la ligne de sélection associée, dont une électrode est connectée à la ligne de donnée associée. Ce premier transistor est connecté en série avec un deuxième transistor Tb, dont la grille est commandée par l'un des deux signaux de sélection trame. Ce deuxième transistor a une électrode connectée à une électrode du premier transistor, et l'autre électrode connectée à un condensateur de stockage Cm relié à une référence de tension, typiquement la masse. La donnée échantillonnée est mémorisée sur ce condensateur. Un troisième transistor Tc est connecté entre le condensateur et l'élément pixel. Il est commandé sur sa grille par l'autre signal de sélection de trame. Il permet le transfert de charge entre le condensateur de mémorisation Cm et la capacité équivalente Ceq de l'élément pixel.

Plus généralement, on a dans chaque dispositif d'écriture un premier circuit de commutation Ta, un deuxième circuit de commutation Tb et un troisième circuit de commutation Tc connectés en série entre la ligne de donnée Colⱼ et l'élément pixel XL_{i,j}, et une capacité de stockage Cm dont une borne est connectée entre lesdits deuxième et troisième circuits de commutation Tb et

Tc et une autre borne à un élément de référence de tension. Dans l'exemple, les circuits de commutation sont des transistors MOS. Mais tout autre dispositif semi-conducteur de commutation adapté peut être utilisé, en particulier selon la technologie utilisée.

Par rapport à la structure de l'état de la technique décrite en relation avec les figures 1, 2 et 3, la structure de l'invention ne nécessite qu'une ligne de connexion supplémentaire, pour connecter le deuxième dispositif d'écriture de la dernière ligne de la matrice à la ligne de sélection de la première ligne de la matrice. Par dispositif, elle coûte deux transistors en plus, mais en terme d'occupation de surface, c'est négligeable par rapport au doublement des lignes dans la structure de la figure 3.

Par ailleurs, on bénéficie d'un effet de réduction des fuites sur le condensateur Ceq par les deux transistors, Ta et Tb.

Sur la figure 5, on a détaillé le mode de séquencement d'un afficheur matriciel selon l'invention.

Les signaux de sélection de trame sont des signaux binaires, d'état binaire 0 ou 1 opposé l'un de l'autre.

Dans une première séquence, si Latch_{A}=0 et Latch_{B}=1, les données appliquées sur les colonnes par un dispositif de commande associé (driver) sont échantillonnées et mémorisées successivement dans chaque ligne i d'éléments pixels, dans les dispositifs d'écriture WB_{i,j} activés par la ligne de sélection suivante Lᵢ₊₁ de cette ligne, tandis que les données mémorisées lors de la trame précédente dans les dispositifs d'écriture WA_{i,j} commandés par la ligne de sélection Lᵢ de cette ligne i, sont transférées dans les éléments pixels L_{i,j} de la ligne.

Dans une séquence suivante, Latch_{A}=1 et Latch_{B}=0, les données appliquées sur les colonnes par le dispositif de commande associé sont échantillonnées et mémorisées successivement dans chaque ligne i d'éléments pixels, dans les dispositifs d'écriture W_{A_{i,j}} commandés par la ligne de sélection Lᵢ de cette ligne, tandis que les données mémorisées lors de la trame précédente dans les dispositifs d'écriture W_{B_{i,j}} activés par la ligne de sélection suivante Lᵢ₊₁ de cette ligne i, sont transférées dans les éléments pixels XL_{i,j} de la ligne.

Lorsque l'échantillonnage est commandé par le signal de sélection de trame Latch_{B}, le signal de sélection de ligne émis par le dispositif de commande qui va activer le transistor Ta du dispositif W_{B} (par un registre à décalage) et permettre l'échantillonnage est le signal de sélection qui est émis sur la ligne suivante i+1. Si on prend la figure 5, dans la première séquence, le signal SeIL₁ déclenche l'échantillonnage sur la dernière nième ligne de la matrice, le signal SeIL₂ déclenche l'échantillonnage sur la première ligne de la matrice, le signal SeIL_{I+1} déclenche l'échantillonnage sur la ième ligne de la matrice et ainsi de suite.

Lorsque l'échantillonnage est commandé par le signal de sélection de trame Latch_{A}, c'est le signal de sélection de la ligne émis par le dispositif de commande qui va activer le transistor Ta du dispositif W_{A_{i,j}} (par un registre à décalage) et permettre l'échantillonnage. Si on reprend la figure 5, dans la deuxième séquence, le signal SEIL₁ déclenche l'échantillonnage sur la première ligne 1 de la matrice, le signal SelL₂ déclenche l'échantillonnage sur la deuxième ligne de la matrice, le signal SeILᵢ déclenche l'échantillonnage sur la ième ligne de la matrice et ainsi de suite.

Cela peut se gérer en pratique soit au niveau du dispositif de commande des lignes, en décalant les signaux de façon adaptée, soit au niveau du dispositif de commande des colonnes, en décalant de façon adaptée les lots de données à afficher, pour qu'à tout moment, on échantillonne les données de la bonne ligne.

On notera que si dans l'exemple illustré sur la figure 4, on a utilisé la ligne Lᵢ et la ligne suivante Lᵢ₊₁ pour commander les dispositifs d'écriture des éléments pixels de la ième ligne, on pourrait tout aussi bien prendre la ligne Lᵢ et la ligne Lᵢ₋₁, ou toute autre ligne différente de Lᵢ. Un avantage de prendre une ligne immédiatement adjacente Lᵢ₊₁ ou Lᵢ₋₁, réside dans la simplicité de connexion et de gestion.

Plus généralement l'invention s'applique à un procédé de modification de tous les points d'une image simultanément sur un afficheur matriciel comprenant un dispositif de commande selon l'invention. A chaque nouvelle trame, il inverse les signaux de sélection de trame Latch_{A} et Latch_{B}, pour faire afficher l'information mémorisée à la trame précédente, et échantillonner l'information correspondant à la nouvelle trame.

Pour afficher une image couleur au moyen d'un afficheur matriciel selon l'invention, un dispositif de commande en séquentiel couleur va appliquer pour chaque trame correspondant à une image, une trame couleur pour chaque couleur, typiquement une trame de rouge, une trame de vert et une trame de bleu. A chaque nouvelle trame, couleur, il inverse les signaux de sélection de trame Latch_{A} et Latch_{B}, pour faire afficher l'information mémorisée pendant la trame couleur précédente, correspondant à la couleur sous laquelle il est éclairé, et échantillonner l'information correspondant à la nouvelle trame couleur, dans la même période.

Bien que plus particulièrement adaptée à l'utilisation d'afficheurs matriciels de type LCOS plus particulièrement visée dans les applications concernées, telles que les systèmes de projection vidéo et les systèmes de réalité virtuelle, l'invention peut s'appliquer à tout type d'afficheur que l'on voudrait vouloir commander selon les principes donnés dans l'invention.

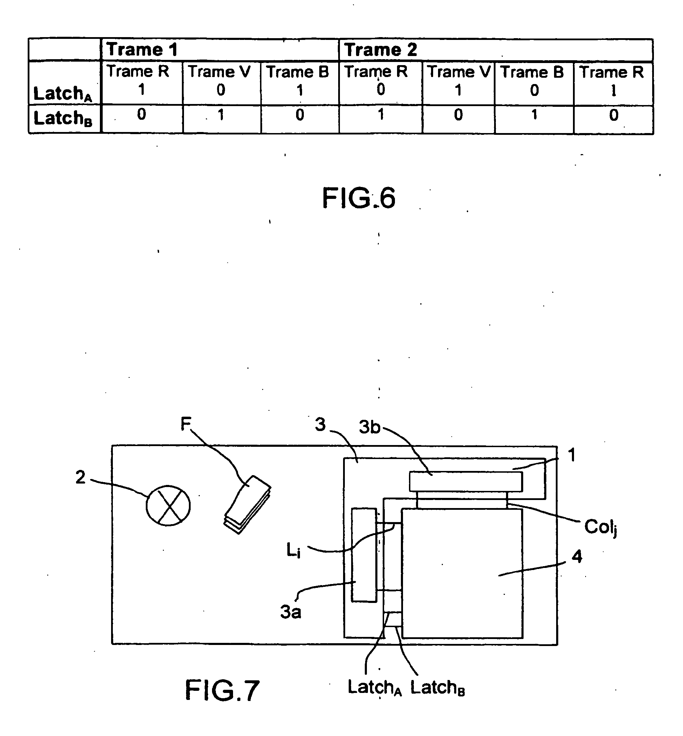

Un système de projection 1 utilisant un tel afficheur matriciel 4 comprendra typiquement et comme schématiquement représenté sur la figure 7, une source de lumière blanche 2, typiquement de 500 watts.

Le système comprend un dispositif de commande 3 de l'afficheur 4, fournissant les signaux de sélection de trame Latch_{A} et Latch_{B} selon l'invention et formé d'un dispositif 3a de commande des lignes de sélection et d'un dispositif 3b de commande des lignes de données.

Dans le cas d'un système de projection d'images vidéo couleur, le système comprend en outre des filtres couleurs F. L'afficheur est séquentiellement éclairé en lumière rouge, verte puis bleue, au moyen des filtres. Il est commandé de façon adaptée par le dispositif de commande au moyen des signaux de sélection de trame Latch_{A} et Latch_{B}, pour afficher l'information mémorisée à la trame couleur précédente, correspondant à la couleur sous laquelle il est éclairé, et échantillonner l'information correspondant à la nouvelle trame couleur.

L'invention s'applique à d'autres systèmes. Elle s'applique notamment à un système vidéo comprenant un tel système de projection, pour des applications de réalité virtuelle.

## Revendications

1. Afficheur matriciel à cristaux liquides, comprenant une matrice d'éléments pixels, chaque élément pixel étant associé à une ligne de sélection (Lᵢ) et une ligne de donnée (Colⱼ) de la matrice,
- un dispositif de commande de la matrice délivrant au moins un premier signal de sélection de trame (Latch_{A}) et un deuxième signal de sélection de trame (Latch_{B});
- un premier dispositif d'écriture (W_{A_{i,j}}) et un deuxième dispositif d'écriture (W_{B_{i,j}}) associé à chaque élément pixel (XL_{i,j}) de la matrice, lesdits dispositifs d'écriture étant à commandes de transfert et d'échantillonnage croisées, le premier signal de sélection de trame (Latch_{A}) entraînant l'échantillonnage dans le premier dispositif d'écriture, et la mise en contact d'une information déjà échantillonnée dans le deuxième dispositif d'écriture et de l'élément pixel, le deuxième signal de sélection de trame (Latch_{B}) entraînant l'échantillonnage dans le deuxième dispositif d'écriture, et la mise en contact d'une information déjà échantillonnée dans le premier dispositif d'écriture et de l'élément pixel, **caractérisé en ce qu'**un des deux
dispositifs d'écriture est connecté à la ligne de sélection (Li) associée de l'élément pixel (XL_{i,j}), et l'autre dispositif est connecté à une autre ligne de sélection (Lᵢ₊₁) de la matrice.

2. Afficheur matriciel selon la revendication 1, **caractérisé en ce que** le premier signal de sélection de trame (Latch_{A}) et le deuxième signal de sélection de trame (Latchₐ) sont des signaux binaires inverses l'un de l'autre.

3. Afficheur matriciel selon la revendication 2, **caractérisé en ce que** le dispositif de commande inverse les niveaux desdits premier signal de sélection de trame (Latch_{A}) et deuxième signal de sélection de trame (Latchₐ) à chaque nouvelle trame.

4. Afficheur matriciel selon la revendication 2, **caractérisé en ce que** l'affichage matriciel un affichage matriciel à mode séquentiel couleur et le dispositif de commande inverse les niveaux desdits premier signal de sélection de trame (Latch_{A}) et deuxième signal de trame (Latch_{B}) à chaque nouvelle trame couleur.

5. Afficheur matriciel selon la revendication 1, **caractérisé en ce que** chacun des premier et deuxième dispositifs d'écriture comprend un premier (Ta), un deuxième (Tb) et un troisième (Tc) circuits de commutation connectés en série entre la ligne de donnée (Colⱼ) et l'élément pixel (XL_{i,j}), et une capacité de stockage (Cm) dont une borne est connectée entre lesdits deuxième (Tb) et troisième (Tc) circuits de commutation et une autre borne à un élément de référence de tension.

6. Afficheur matriciel selon la revendication 5, dans lequel lesdits circuits de commutation sont des transistors.

7. Procédé de modification de tous les points d'une image simultanément sur un afficheur matriciel selon la revendication 3, les signaux de sélection de trame (Latch_{A}, Latch_{B}) étant inversés à chaque nouvelle trame, pour faire afficher l'information mémorisée à la trame précédente, et échantillonner l'information correspondant à une nouvelle trame.

8. Système de projection comprenant un afficheur matriciel selon la revendication 4, adapté à une utilisation en mode séquentiel couleur.

9. Système de projection selon la revendication 8, comprenant une source de lumière blanche (2) et des filtres couleurs (F), ledit afficheur étant séquentiellement éclairé en lumière rouge, en lumière verte, en lumière bleue, selon une séquence déterminée au moyen des filtres, et le dispositif de commande étant adapté pour afficher l'information mémorisée à une trame couleur précédente, correspondant à la couleur sous laquelle l'afficheur est éclairé.

10. Système d'affichage d'images vidéo comprenant un système de projection selon l'une des revendications 8 et 9.

11. Système de réalité virtuelle comprenant un système de projection selon l'une des revendications 8 et 9.

## Claims

1. Liquid-crystal matrix display, comprising a matrix of pixel elements, each pixel element being associated with a selection line (Lᵢ) and a data line (Colⱼ) of the matrix,
- a matrix driver delivering at least a first frame selection signal (Latch_{A}) and a second frame selection signal (Latch_{B}) ;
- a first write device (W_{A_{I,j}}) and a second write device (W_{BI,j}) associated with each pixel element (XL_{i,j}) of the matrix, the said write devices being of the type with crossed sampling and transfer commands, the first frame selection signal (Latch_{A}) causing the sampling in the first write device and the contacting of information already sampled in the second write device with the pixel element, the second frame selection signal (Latch_{B}) causing the sampling in the second write device and the contacting of information already sampled in the first write device with the pixel element, **characterized in that** one of the two write devices connected to the associated selection line (Li) of the pixel element (XL_{i,j}), and the other device is connected to another selection line (Lᵢ₊₁) of the matrix.

2. Matrix display according to Claim 1, **characterized in that** the first frame selection signal (Latch_{A}) and the second frame selection signal (Latch_{B}) are mutually inverted binary signals.

3. Matrix display according to Claim 2, **characterized in that** the driver inverts the levels of the said first frame selection signal (Latch_{A}) and second frame selection signal (Latch_{B}) at each new frame.

4. Matrix display according to Claim 2, **characterized in that** the matrix display is a colour sequential-mode matrix display and the driver inverts the levels of the said first frame selection signal (Latch_{A}) and second frame selection signal (Latch_{B}) at each new colour frame.

5. Matrix display according to Claim 1, **characterized in that** each of the first and second write devices comprises a first (Ta), a second (Tb) and a third (Tc) switching circuit connected in series between the data line (Colⱼ) and the pixel element (XL_{i,j}), and a storage capacitance (Cm) of which one terminal is connected between the said second (Tb) and third (Tc) switching circuits and another terminal to a reference voltage element.

6. Matrix display according to Claim 5, in which the said switching circuits are transistors.

7. Method of modifying all the points of an image simultaneously on a matrix display according to Claim 3, the frame selection signals (Latch_{A}, Latch_{B}) being inverted at each new frame, in order to cause the information stored at the preceding frame to be displayed, and to sample the information corresponding to a new frame.

8. Projection system comprising a matrix display according to Claim 4, designed to be used in colour sequential mode.

9. Projection system according to Claim 8, comprising a white light source (2) and colour filters (F), the said display being sequentially illuminated with red light, with green light, with blue light, in a defined sequence by means of the filters, and the driver being designed to display the information stored at a preceding colour frame, corresponding to the colour with which the display is illuminated.

10. Video image display system comprising a projection system according to either of Claims 8 and 9.

11. Virtual reality system comprising a projection system according to either of Claims 8 and 9.

## Patentansprüche

1. Flüssigkristall-Matrixanzeiger, der eine Matrix von Pixelelementen, wobei jedes Pixelelement einer Auswahlzeile (Lᵢ) und einer Datenzeile (Colⱼ) der Matrix zugeordnet ist,
eine Steuervorrichtung der Matrix, die mindestens ein erstes Rasterauswahlsignal (Latch_{A}) und ein zweites Rasterauswahlsignal (Latch_{B}) liefert;
eine erste Schreibvorrichtung (WA_{i,j}) und eine zweite Schreibvorrichtung (WB_{i,j}) aufweist, die jedem Pixelelement (XL_{i,j}) der Matrix zugeordnet ist, wobei die Schreibvorrichtungen gekreuzte Übertragungs- und Abtaststeuerungen aufweisen, wobei das erste Rasterauswahlsignal (Latch_{A}) die Abtastung in der ersten Schreibvorrichtung und die Zusammenführung einer bereits in der zweiten Schreibvorrichtung abgetasteten Information und des Pixelelements bewirkt, während das zweite Rasterauswahlsignal (Latch_{B}) die Abtastung in der zweiten Schreibvorrichtung und die Zusammenführung einer bereits in der ersten Schreibvorrichtung abgetasteten Information und des Pixelelements bewirkt,
**dadurch gekennzeichnet, dass** eine der zwei Schreibvorrichtungen mit der zugeordneten Auswahlzeile (Lᵢ) des Pixelelements (XL_{i,j}) verbunden ist und die andere Vorrichtung mit einer anderen Auswahlzeile (Lᵢ₊₁) der Matrix verbunden ist.

2. Matrixanzeiger nach Anspruch 1, **dadurch gekennzeichnet, dass** das erste Rasterauswahlsignal (Latch_{A}) und das zweite Rasterauswahlsignal (Latch_{B}) zueinander umgekehrte Binärsignale sind.

3. Matrixanzeiger nach Anspruch 2, **dadurch gekennzeichnet, dass** die Steuervorrichtung die Pegel des ersten Rasterauswahlsignals (Latch_{A}) und zweiten Rasterauswahlsignals (Latch_{B}) bei jedem neuen Raster umkehrt.

4. Matrixanzeiger nach Anspruch 2, **dadurch gekennzeichnet, dass** die Matrixanzeige eine Matrixanzeige mit sequentiellem Farbmodus ist und die Steuervorrichtung die Pegel des ersten Rasterauswahlsignals (Latch_{A}) und des zweiten Rasterauswahlsignals (Latch_{B}) bei jedem neuen Farbraster umkehrt.

5. Matrixanzeiger nach Anspruch 1, **dadurch gekennzeichnet, dass** jede der ersten und zweiten Schreibvorrichtungen einen ersten (Ta), einen zweiten (Tb) und einen dritten (Tc) Schaltkreis, die in Reihe zwischen die Datenzeile (Colⱼ) und das Pixelelement (XL_{i,j}) geschaltet sind, und einen Speicherkondensator (Cm) aufweisen, von dem eine Anschlussklemme zwischen dem zweiten (Tb) und dem dritten (Tc) Schaltkreis und eine andere Anschlussklemme mit einem Spannungsreferenzelement verbunden ist.

6. Matrixanzeiger nach Anspruch 5, bei dem die Schaltkreise Transistoren sind.

7. Verfahren zur gleichzeitigen Veränderung aller Punkte eines Bilds auf einem Matrixanzeiger nach Anspruch 3, wobei die Rasterauswahlsignale (Latch_{A}, Latch_{B}) bei jedem neuen Raster umgekehrt werden, um die im vorhergehenden Raster gespeicherte Information anzuzeigen und die einem neuen Raster entsprechende Information abzutasten.

8. Projektionssystem mit einem Matrixanzeiger nach Anspruch 4, das für eine Verwendung im sequentiellen Farbmodus geeignet ist.

9. Projektionssystem nach Anspruch 8, das eine Weißlichtquelle (2) und Farbfilter (F) aufweist, wobei der Anzeiger gemäß einer mittels der Filter bestimmten Sequenz sequentiell mit rotem Licht, mit grünem Licht, mit blauem Licht beleuchtet wird, und wobei die Steuervorrichtung geeignet ist, um die in einem vorhergehenden Farbraster gespeicherte Information anzuzeigen, das der Farbe entspricht, mit der der Anzeiger beleuchtet wird.

10. Anzeigesystem für Videobilder, das ein Projektionssystem nach einem der Ansprüche 8 und 9 aufweist.

11. System virtueller Realität, das ein Projektionssystem nach einem der Ansprüche 8 und 9 aufweist.
